# FASCICULE DE BREVET EUROPEEN

(11) **EP 1 663 680 B1**
(45) Date de publication et mention de la délivrance du brevet: **09.07.2008**
(21) Numéro de dépôt: 04816193.9
(22) Date de dépôt: 07.09.2004
(51) Int. Cl.: B60H 1/00, B60H 1/32

(54) **DISPOSITIF DE CLIMATISATION PILOTE ET PROCEDE DE PILOTAGE D'UNE TELLE CLIMATISATION**
GESTEUERTE KLIMATISIERUNGSVORRICHTUNG UND VERFAHREN ZUR STEUERUNG DER LUFTKLIMATISIERUNG
CONTROLLED AIR-CONDITIONING DEVICE AND METHOD FOR CONTROLLING SAID AIR-CONDITIONING

(30) Priorité: 12.09.2003 FR 0310740
(43) Date de publication de la demande: 07.06.2006
(73) Titulaire: Hispacold France, 33520 Bruges (FR)
(72) Inventeur: NIEDDU, Giovanni, F-33700 Merignac (FR)
(74) Mandataire: Schmit, Christian Norbert Marie
(86) Numéro de dépôt international: PCT/FR2004/050414
(87) Numéro de publication internationale: WO 2005/028224

(56) Documents cités:
- FR-A- 1 234 425
- FR-A- 2 464 443
- GB-A- 1 133 186
- US-A- 3 818 717

## Description

La présente invention concerne un dispositif de climatisation piloté pour véhicule et son procédé de pilotage.

Des dispositifs et procédés de climatisation pilotés par un calculateur ou boîtier de pilotage automatique existent et sont généralement basés sur une sonde de température intérieure au véhicule, un compresseur entraîné par le moteur, un condenseur puis un ou plusieurs évaporateurs en aval du condenseur destiné à produire l'air réfrigéré destiné à refroidir l'habitacle du véhicule, un calculateur analysant la température intérieure du véhicule faisant varier la position d'une vanne d'admission d'air entre l'air extérieur et l'air réfrigéré pour réguler la température de l'habitacle.

Les systèmes traditionnels sont réalisés pour fournir leur meilleur rendement pour une vitesse de rotation du moteur du véhicule entraînant le compresseur importante et un couplage du compresseur avec le moteur pendant des temps longs sans désaccouplements fréquents. Ces systèmes sont optimisés pour un régime de fonctionnement selon la plage optimale de fonctionnement du moteur thermique du véhicule alors que leur efficacité est faible sur des régimes moteur proche du ralenti.

Dans le cas de véhicules de transport en commun urbains, le moteur du véhicule tourne une majeure partie du temps au ralenti, a des phases d'accélération et de décélération fréquentes et finalement peu de phases de fonctionnement à régime moteur élevé en continu.

Dans le but de maintenir le fluide réfrigérant à température constante, le document FR1234425, qui est considéré comme l'art antérieur le plus proche, décrit un dispositif de climatisation piloté pour véhicule comprenant un compresseur entraîné par le moteur du véhicule au travers de moyens d'embrayage, un condenseur, au moins un évaporateur et un circuit principal de circulation d'un fluide réfrigérant entre le compresseur, le condenseur et ledit évaporateur, le circuit comportant une première branche d'amenée du fluide du compresseur au condenseur, une deuxième branche d'amenée du fluide du condenseur audit évaporateur, une troisième branche d'aspiration du fluide de l'évaporateur vers le compresseur, ledit dispositif de climatisation comportant de plus un circuit complémentaire disposé entre la première branche et la troisième branche, destiné à renvoyer les gaz refoulés par le compresseur directement vers l'aspiration du compresseur et un dispositif de commande de la mise en et hors fonction du circuit complémentaire.

Le dispositif et le procédé suivant l'invention visent à réaliser un dispositif de climatisation pilotée adapté à un fonctionnement optimal sur des phases de ralenti du véhicule, ne dégradant pas les caractéristiques d'accélération du véhicule et restant faiblement consommateur d'énergie.

Pour ce faire, le dispositif de climatisation piloté selon l'invention, comprenant un compresseur entraîné par le moteur du véhicule au travers de moyens d'embrayage, un condenseur, au moins un évaporateur et un circuit, dit circuit principal, de circulation d'un fluide réfrigérant entre le compresseur, le condenseur et ledit évaporateur, comportant une première branche d'amenée du fluide du compresseur au condenseur, une deuxième branche d'amenée du fluide du condenseur audit évaporateur, une troisième branche d'aspiration du fluide de l'évaporateur vers le compresseur, est caractérisé en ce qu'il comporte un circuit complémentaire, disposé entre la première branche et la troisième branche du circuit principal, destiné à renvoyer les gaz refoulés par le compresseur directement vers l'aspiration du compresseur et un dispositif de commande de la mise en et hors fonction du circuit complémentaire, ledit dispositif de commande comprenant une électrovanne et un calculateur de gestion du dispositif de climatisation, ledit calculateur comportant des moyens de détection des phases de fonctionnement du véhicule. Le dispositif est avantageux notamment pour les véhicules de transport en commun urbain ou pour les véhicules de faible cylindrée roulant fréquemment en parcours urbain.

Avantageusement le circuit principal peut comporter un clapet anti-retour situé sur la première branche en aval du circuit complémentaire et retenant le fluide dans le condenseur lors de la mise en fonction du circuit complémentaire.

En mode de réalisation préférentiel de l'invention, le dispositif comporte un calculateur de gestion du dispositif de climatisation pourvu de moyens de détection des phases d'accélération du véhicule.

Avantageusement, le calculateur peut en outre comporter des moyens de détection du régime de ralenti du moteur.

L'invention concerne aussi un procédé de pilotage d'un dispositif de climatisation piloté, comprenant un compresseur entraîné par le moteur du véhicule au travers de moyens d'embrayage, un condenseur, au moins un évaporateur et un circuit principal de circulation d'un fluide réfrigérant entre le compresseur le condenseur et ledit évaporateur, un circuit complémentaire, destiné à boucler le compresseur sur lui même et isoler le circuit principal, un dispositif de commande de la mise en et hors fonction du circuit complémentaire, un dispositif de commande de l'embrayage et du débrayage du compresseur, des moyens de détection de phases de ralenti, d'accélération et de décélération du véhicule, le procédé comprenant des séquences de mise en fonction du circuit complémentaire sur détection d'une accélération ou de haut régime du moteur du véhicule. Le procédé est avantageux en ce qu'il limite le nombre d'actions sur l'embrayage du compresseur et permet d'obtenir une climatisation efficace en parcours urbain ce qui le rend très favorable notamment pour les véhicules de transport en commun urbain.

Plus particulièrement, le procédé peut comprendre des séquences de mise en fonction du circuit complémentaire simultanées à des phases d'embrayage du compresseur.

En mode de réalisation préférentiel, le procédé comprend des séquences d'interdiction d'embrayage du compresseur sur détection de l'accélération du véhicule ou de haut régime moteur du véhicule.

Selon un mode de réalisation particulier, le procédé comprend des séquences de régulation de la température intérieure du véhicule par pilotage du circuit complémentaire en fonction de mesures réalisées par des moyens de mesure de température intérieure et extérieure au véhicule.

En mode de réalisation particulièrement avantageux, les séquences de mise en fonction du circuit complémentaire sur détection d'accélérations du moteur du véhicule sont suivies par des séquences de maintien en fonction du circuit complémentaire de durée maximale dépendante de la mesure de température intérieure du véhicule.

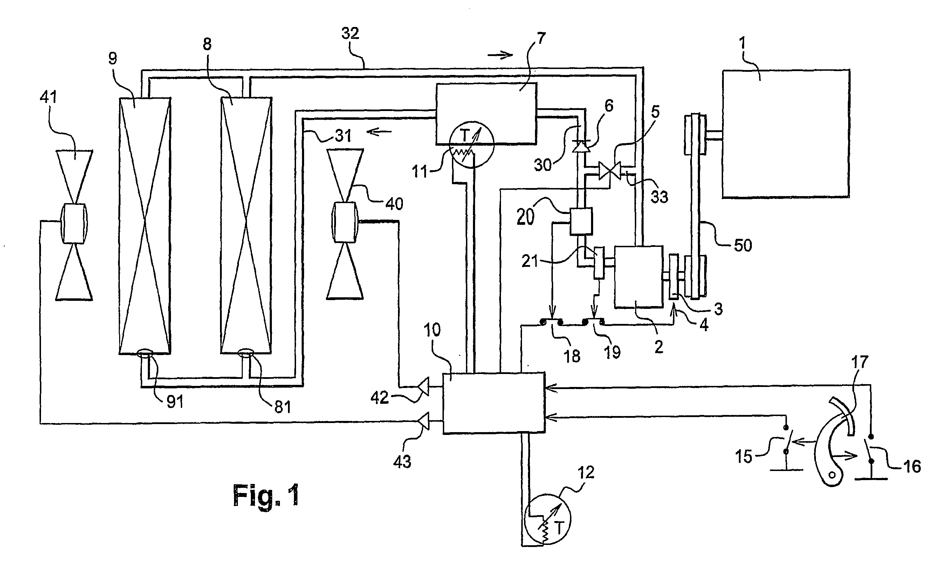

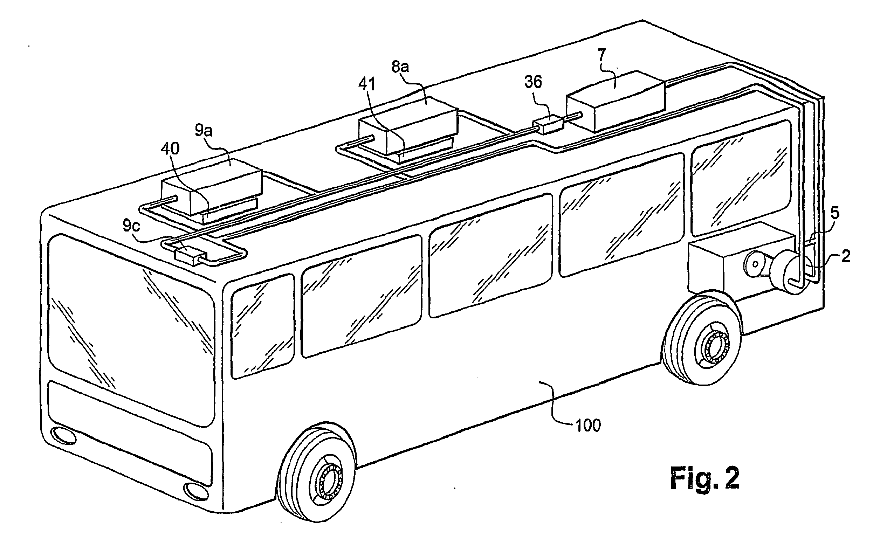

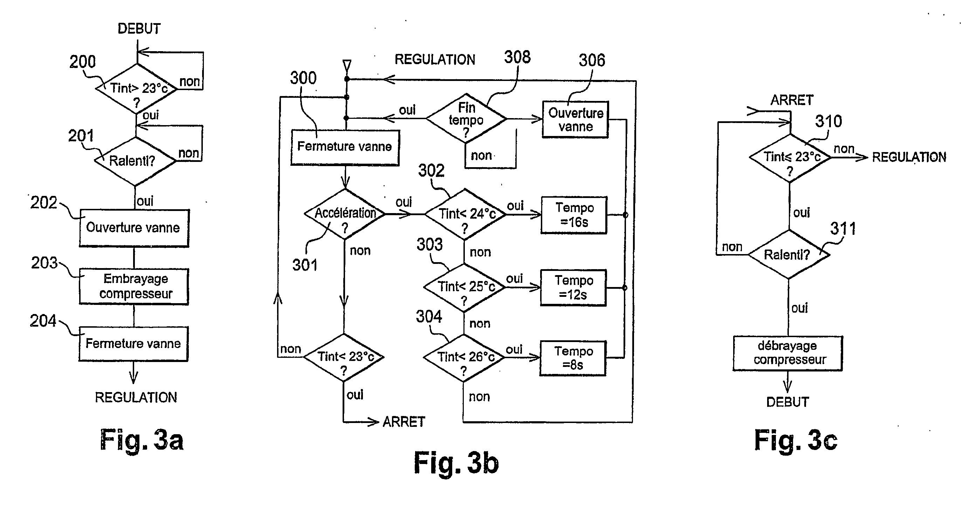

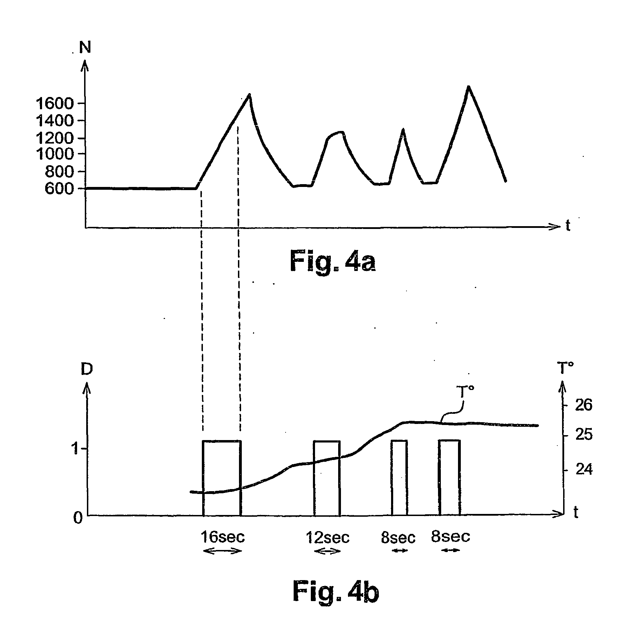

D'autres caractéristiques et avantages de l'invention seront mieux compris à la lecture de la description qui va suivre d'un exemple de réalisation non limitatif de l'invention en référence aux figures qui représentent:
En figure 1 une vue schématique d'un dispositif de climatisation pilotée selon l'invention;
En figure 2 une vue schématique d'un véhicule de transport équipé de dispositifs de climatisation selon l'invention;
En figure 3a, 3b, 3c des illustrations d'étapes de fonctionnement du dispositif selon le procédé de l'invention.
En figures 4a, une illustration d'un cycle de fonctionnement urbain d'un véhicule de transport en commun;
En figure 4b une illustration d'un cycle de fonctionnement du dispositif selon l'invention.

Le dispositif de climatisation piloté, notamment pour véhicule 100 selon l'invention est schématisé en figure 1 dans le cadre de son application sur un véhicule de transport en commun. Il comprend un compresseur 2 entraîné par le moteur 1 du véhicule au travers de moyens d'embrayage 3. L'entraînement du compresseur se fait traditionnellement par une courroie 50, les moyens d'embrayage comportant une commande 4 électromagnétique permettant l'embrayage et le débrayage du compresseur.

Le dispositif comprend en outre un condenseur 7 dans lequel le fluide réfrigérant passe d'un état gazeux à un état liquide, deux évaporateurs 8, 9 selon l'exemple, et un circuit de circulation du fluide réfrigérant entre le compresseur 2, le condenseur 7 et les évaporateurs 8, 9. Les évaporateurs sont munis de détendeurs 81, 91 permettant le passage du fluide de l'état liquide à l'état gazeux refroidi.

Le circuit comporte traditionnellement une première branche 30 d'amenée du fluide du compresseur 2 au condenseur 7, une deuxième branche 31 d'amenée du fluide liquéfié du condenseur 7 à l'évaporateur, ou selon l'exemple, aux évaporateurs 8, 9, une troisième branche 32 d'aspiration permettant le retour du fluide des évaporateurs 8, 9 vers le compresseur 2.

Pour optimiser la climatisation, un premier point pris en compte est que, dans le cas d'une utilisation urbaine typique, on s'aperçoit que le temps de fonctionnement du véhicule au ralenti est très important, de l'ordre de 30 à 50% du cycle, les temps de fonctionnement du véhicule moteur à haut régime sont très limités de l'ordre de 5% dans une grande ville, le reste correspondant à des phases d'accélération et de décélération.

Pour favoriser un fonctionnement moteur au ralenti, il est avantageux de faire tourner le compresseur en charge à une vitesse deux à trois fois plus importante que le moteur, de façon à avoir un bon rendement du compresseur moteur du véhicule au ralenti, contrairement à un dispositif de climatisation traditionnel optimisé pour un fonctionnement sur les régimes de croisière du véhicule pour lequel le rapport de régime entre le compresseur et le moteur est plus faible par exemple de 2000 tours/min compresseur pour un régime moteur de 1600 tours/min.

Par contre, du fait du rapport de régimes important entre la vitesse de rotation du compresseur et le moteur dans le cadre d'une utilisation urbaine, une régulation basée sur des embrayages et débrayages du compresseur sans tenir compte du régime moteur du véhicule conduit à des embrayages fréquents du compresseur en accélération du véhicule, limitant la puissance disponible pour ces accélérations, et a des embrayages du compresseur lors de phases de régime accéléré, ce qui exerce des contraintes très importantes sur la courroie et le dispositif d'embrayage du compresseur pouvant conduire à une usure prématurée de ces derniers.

Ainsi, afin d'optimiser le fonctionnement du dispositif et selon un premier aspect de l'invention, le dispositif est pourvu d'un circuit 33 complémentaire, disposé entre la première branche 30 et la troisième branche 32 du circuit principal, ce circuit complémentaire étant destiné à boucler le compresseur sur lui même en renvoyant les gaz refoulés par le compresseur vers l'aspiration du compresseur. La mise en fonction de ce circuit complémentaire boucle le compresseur sur lui même et décharge le moteur 1 de la puissance consommée par le dispositif de climatisation sans devoir débrayer le compresseur.

Afin de piloter ce circuit 33 complémentaire, l'invention prévoit principalement un dispositif 5, 10 comprenant une électrovanne 5 et un calculateur 10 de commande de la mise en et hors fonction du circuit complémentaire renvoyant les gaz expulsés par le compresseur directement vers l'entrée du compresseur.

L'électrovanne pourrait être commandée directement par un système d'interrupteur sur un capteur de position d'accélérateur mais la gestion par un calculateur permet un fonctionnement optimisé.

Notamment le compresseur 2 peut être désactivé par l'intermédiaire de l'électrovanne 5 ou vanne bipasse lors des accélérations du véhicule, ce qui déleste le moteur 1 du véhicule de la puissance absorbée par le compresseur sans jouer sur l'embrayage 3 du compresseur. L'illustration du fonctionnement du délestage est représenté en figure 4b en rapport avec le cycle de fonctionnement vu précédemment.

Afin de ne pas faire chuter la pression dans le circuit principal lorsque le circuit 33 complémentaire est ouvert il est souhaitable d'isoler le condenseur 7 du compresseur et ainsi d'isoler la partie haute pression du circuit principal.

L'invention prévoit un clapet anti-retour 6 situé sur la première branche 30 en aval du circuit 33 complémentaire pour retenir le fluide dans le condenseur lors de la mise en fonction du circuit 33 complémentaire. Ainsi lors des phases de délestage, le condenseur continue de fournir du fluide réfrigérant aux évaporateurs 8, 9 régulés par les détendeurs 81, 91.

Lors de phases de décélération et de ralenti, le circuit principal peut être rapidement réactivé par fermeture de l'électrovanne 5 et le fonctionnement de la climatisation peut être maintenu.

Ainsi selon l'invention, il est possible de diminuer la charge du moteur sans jouer sur des embrayages/débrayages fréquents du compresseur 2 mais en pilotant selon une programmation donnée la vanne 5 de délestage mettant en oeuvre le circuit complémentaire.

En variante, une vanne trois voies peut remplacer la vanne 5 et le clapet 6 tout en restant dans l'esprit de l'invention.

Afin de limiter l'échauffement du compresseur lors de son rebouclage par le circuit complémentaire, un compresseur rotatif à spirale dit compresseur "scroll" sera préféré. En effet la puissance absorbée par ce type de compresseur rotatif est inférieure à la puissance absorbée par un compresseur à mouvement alternatif équivalent et, du fait de ses faibles pertes par frottements internes, ce type de compresseur s'échauffe très peu une fois rebouclé. Par ailleurs, un tel compresseur permet des régimes élevés et possède un meilleur rendement.

Pour améliorer le fonctionnement du dispositif, la gestion de l'électrovanne 5 de délestage est confiée à un calculateur 10 comportant des moyens 15 de détection des phases de fonctionnement du véhicule.

Le calculateur 10 comporte notamment des moyens 16 de détection du régime de ralenti du moteur 1, soit des moyens directs tel qu'un capteur 16 sur la pédale d'accélération, soit des moyens indirects tels qu'un capteur de détection de arrêt du véhicule.

Le calculateur selon l'exemple comporte des entrées de mesure de température extérieure par une sonde de température 11, de température intérieure par une sonde de température 12, le calculateur comportant des lois de gestion de l'embrayage 3 et de la vanne 5 qui seront illustrées ci dessous dans le cadre d'un procédé de pilotage selon l'invention du dispositif de climatisation.

Le calculateur peut en outre gérer en fonction de la température des dispositifs de soufflage 40, 41 distribuant l'air refroidi par les évaporateurs 8, 9 dans l'habitacle du véhicule.

Le fonctionnement du dispositif de climatisation géré par le calculateur 10 comporte des séquences qui seront décrites ci-dessous.

Les séquences de test sont symbolisées par des losanges, les actions par des rectangles.

Une première séquence illustrée par la figure 3a concerne la mise en fonction du dispositif de climatisation.

Dans le but de limiter l'usure de la courroie 50 et de l'embrayage 3, des séquences 202 de mise en fonction du circuit 33 complémentaire simultanées aux phases d'embrayage 203 du compresseur sont prévues. En outre il est prévu de ne mettre en fonction le dispositif de climatisation qu'à partir d'une température intérieure mesurée au niveau de la sonde 12 supérieure à une valeur donnée, par exemple aux alentour de 23°C et de désactiver le dispositif pour une température intérieure inférieure. Une séquence test température 200 est prévue à cet effet.

En outre, et dans le but de ne pas détériorer les éléments mécaniques du dispositif, le procédé comporte une séquence 201 d'interdiction d'embrayage du compresseur sur détection de l'accélération du véhicule afin notamment de ne permettre la mise en fonction du dispositif qu'au ralenti ou véhicule à l'arrêt.

il peut être choisi, dans le cadre d'une utilisation urbaine, de faire fonctionner le compresseur de manière continue au dessus d'un seuil de température intérieure donné.

Selon ce principe, une fois le dispositif de climatisation en fonctionnement, ce qui correspond à la figure 3b régulation, l'invention permet de réduire la charge du moteur par un pilotage de la vanne 5, le calculateur ouvrant la vanne bipasse en début d'accélération du véhicule pour donner la priorité à l'économie de puissance moteur.

Partant d'une condition de fonctionnement vanne fermée 300, le procédé de pilotage comporte donc une séquence 301 de test d'accélération, séquence dont le résultat conditionne une séquence d'ouverture 306 ou un maintien en fermeture de l'électrovanne 5 commandant le circuit 33.

Pour éviter des ouvertures/fermetures de la vanne 5 trop fréquentes ou intempestives sur des accélérations trop brèves, la séquence 301 de test d'accélération peut comporter une phase de validation à hystérésis et au moins une séquence de temporisation 308 peut être prévue.

Pour le test d'accélération, le calculateur est apte à détecter une accélération du véhicule par exemple par un capteur 15 sur la pédale 17 d'accélération.

Le pilotage du dispositif comporte le test de détection 301 suivi par des séquences 302, 303, 304 de test de température donnant une valeur de temporisation pour la séquence de temporisation 308 permettant de prolonger le fonctionnement du circuit de décharge pendant un temps maximum en fonction de la température intérieure du véhicule par exemple par des paliers de temps choisis selon la température, ce qui se traduit par des séquences de maintien en fonction du circuit complémentaire de durée maximale dépendante de la mesure de température intérieure du véhicule.

A titre d'exemple, le délestage peut être réalisé pendant 16 secondes à partir de la détection d'accélération pour une température inférieure à un premier seuil par exemple 24°C correspondant au test 302, peut être réduit à 12 secondes par accélérations pour une température intérieure comprise entre 24 et 25°C par le test 303, limité à 8 secondes pour une température intérieure entre 25 et 26°C selon le test 304 puis inactivé si la température intérieure du véhicule croît au delà de 26°C afin de privilégier le confort passager.

Un exemple de fonctionnement de la commande D de délestage en fonction de la température et des phases de fonctionnement du véhicule est donné en figures 4a et 4b.

En figure 4a est représentée un courbe régime moteur N par rapport au temps et sa conséquence sur le pilotage de la vanne 5 en figure 4b en fonction de la température intérieure T°. Comme représenté, les cycles d'ouverture de la vanne sont limités par l'augmentation de la température.

D'autres modes de pilotage sont possibles selon l'invention et notamment il est possible de détecter la décélération pour fermer la vanne avant la fin de la temporisation, le temps d'ouverture de la vanne étant alors la plus petite valeur entre la consigne de temporisation et la durée d'accélération.

Il est bien entendu possible de prévoir pour les test de capteurs, des boucles de test pourvues de filtrage de rebond des contacteurs ou de seuils de détection adaptés pour éviter des ouvertures/fermetures trop fréquentes de la vanne 5 de régulation.

Lorsque la température intérieure redescend au dessous d'un seuil prédéterminé, il est selon l'exemple de réalisation prévu d'arrêter le dispositif de climatisation. Le procédé schématisé en figure 3c et dénommé "arrêt" comporte pour ce faire une séquence 310 de test température. Selon le procédé de l'invention, le calculateur est programmé pour interdire le débrayage du compresseur en décélération ou à haut régime, ce pour éviter des à-coups et/ou contraintes trop forts et pour faire bénéficier le circuit de climatisation de la puissance d'inertie du véhicule.

Une séquence d'interdiction du débrayage du compresseur en dehors des phases de ralenti moteur comporte un test 311 de ralenti moteur ou véhicule à l'arrêt. Lorsque le ralenti moteur est atteint, la séquence 313 de débrayage du compresseur a lieu.

Dans le cas où une régulation fine de la température est souhaitée, un pilotage du circuit 33 complémentaire en fonction de mesures réalisées par les moyens de mesure de température intérieure et extérieure du véhicule par des commandes de la vanne 5 par des séquences d'ouverture/fermeture est possible notamment sur un parcours péri urbain à vitesse stabilisée.

Les évaporateurs 8, 9a, 9b répartis dans l'habitacle sont éventuellement dimensionnés de telle sorte que lors de la mise en fonction de la vanne bipasse 5 lors des accélérations du véhicule, les évaporateurs, précédés d'un réservoir/déshydrateur 36 procurent une réserve de froid utilisable pendant ces phases.

Le dispositif comporte en outre des moyens de coupure 21 du circuit principal en amont du circuit complémentaire sur détection de surpression 18 ou de sous pression 19 du fluide.

Selon le procédé, lors de phases de décélération et de ralenti, le fonctionnement de la climatisation est maintenu. D'autres lois de pilotage de la climatisation peuvent être ajoutées et, notamment en fonction des conditions d'utilisation, certains des éléments tels que ventilateurs ou évaporateurs peuvent être sélectivement désactivés.

## Revendications

1. - Dispositif de climatisation piloté pour véhicule comprenant un compresseur (2) entraîné par le moteur (1) du véhicule au travers de moyens d'embrayage (3), un condenseur (7), au moins un évaporateur (8, 9) et un circuit principal de circulation d'un fluide réfrigérant entre le compresseur (2), le condenseur (7) et ledit évaporateur (8, 9), le circuit comportant une première branche (30) d'amenée du fluide du compresseur (2) au condenseur (7), une deuxième branche (31) d'amenée du fluide du condenseur (7) audit évaporateur (8, 9) une troisième branche (32) d'aspiration du fluide de l'évaporateur (8, 9) vers le compresseur (2), comportant un circuit (33) complémentaire, disposé entre la première branche (30) et la troisième branche (32), destiné à renvoyer les gaz refoulés par le compresseur directement vers l'aspiration du compresseur et comporte un dispositif (5, 10) de commande de la mise en et hors fonction du circuit complémentaire, **caractérisé en ce que** le dispositif (5, 10) de commande comprend une électrovanne (5) et un calculateur (10) de gestion du dispositif de climatisation, ledit calculateur comportant des moyens (15) de détection de phases de fonctionnement du véhicule.

2. - Dispositif selon la revendication 1 **caractérisé en ce qu'il** comporte un clapet anti-retour (6) situé sur la première branche (30) en aval du circuit (33) complémentaire retenant le fluide dans le condenseur lors de la mise en fonction du circuit (33) complémentaire.

3. - Dispositif selon la revendication 1 ou 2 **caractérisé en ce que** le calculateur (10) comporte des moyens (15) de détection des phases d'accélération du véhicule.

4. - Dispositif selon la revendication 3 **caractérisé en ce que** le calculateur (10) comporte des moyens (16) de détection du régime de ralenti du moteur (1).

5. - Dispositif selon l'une des revendications précédentes **caractérisé en ce qu'**il comporte des moyens (11, 12) de mesure de température interne et/ou externe du véhicule.

6. - Dispositif selon l'une des revendications précédentes **caractérisé en ce que** le compresseur est un compresseur à spirale.

7. - Procédé de pilotage d'un dispositif de climatisation de véhicule comprenant un compresseur (2) entraîné par le moteur (1) du véhicule (100) au travers de moyens d'embrayage (3), un condenseur (7), au moins un évaporateur (8, 9) et un circuit principal (30, 31, 32) de circulation d'un fluide réfrigérant entre le compresseur (2) le condenseur (7) et ledit évaporateur (8, 9), un circuit (33) complémentaire, destiné à renvoyer les gaz refoulés par le compresseur directement vers l'aspiration du compresseur, un dispositif (5, 10) de commande de la mise en et hors fonction du circuit complémentaire, et des moyens (15, 16) de détection de phases de ralenti, d'accélération et de décélération du véhicule **caractérisé en ce qu'**il comprend des séquences de mise en fonction du circuit (33) complémentaire sur détection d'une accélération du moteur du véhicule.

8. - Procédé selon la revendication 7 **caractérisé en ce que,** le dispositif de climatisation comportant un dispositif (4, 10) de commande de l'embrayage et du débrayage du compresseur, le procédé comprend des séquences de mise en fonction du circuit (33) complémentaire simultanées aux phases d'embrayage du compresseur.

9. - Procédé selon la revendication 8 **caractérisé en ce qu'**il comprend des séquences d'interdiction d'embrayage du compresseur sur détection de l'accélération du véhicule ou de haut régime moteur.

10. - Procédé selon l'une des revendications 7 à 9 **caractérisé en ce que** le dispositif comportant des moyens (11, 12) de mesure de température intérieure et extérieure du véhicule, le procédé comprend des séquences de régulation de la température intérieur du véhicule par pilotage du circuit (33) complémentaire en fonction de mesures réalisées par les moyens de mesure de température intérieure et extérieure du véhicule.

11. - Procédé selon l'une des revendications 7 à 10 **caractérisé en ce que** les séquences de mise en fonction du circuit (33) complémentaire sur détection d'accélérations du moteur du véhicule sont suivies par des séquences de maintien en fonction du circuit complémentaire de durée maximale dépendante de la mesure de température intérieure du véhicule.

## Claims

1. A controlled air conditioning device for a vehicle comprising a compressor (2) driven by the vehicle engine (1) through clutch means (3), a condenser (7), at least one evaporator (8, 9) and a main circuit for circulation of a refrigerating fluid between the compressor (2), the condenser (7) and said evaporator (8, 9), the circuit comprising a first branch (3) for bringing fluid from the compressor (2) to the condenser (7), a second branch (31) for bringing fluid from the condenser (7) to said evaporator (8, 9), a third branch (32) for sucking fluid from the evaporator (8, 9) to the compressor (2), comprising a complementary circuit (33) disposed between the first branch (30) and the third branch (32), intended to return the gases discharged by the compressor directly to the suction of the compressor, and comprising a device (5, 10) for controlling the activation and deactivation of the complementary circuit, **characterised in that** the control device (5, 10) comprises a solenoid valve (5) and a computer (10) managing the air conditioning device, said computer comprising means (15) for detecting operating phases of the vehicle.

2. A device according to claim 1, **characterised in that** it comprises a non-return valve (6) situated on the first branch (30) downstream of the complementary circuit (33) for retaining the fluid in the condenser when the complementary circuit (33) is activated.

3. A device according to claim 1 or 2, **characterised in that** the computer (10) comprises means (15) of detecting the acceleration phases of the vehicle.

4. A device according to claim 3, **characterised in that** the computer (10) comprises means (16) of detecting tick-over speed of the engine (1).

5. A device according to one of the preceding claims, **characterised in that** it comprises means (11, 12) of measuring internal and/or external temperature of the vehicle.

6. A device according to one of the preceding claims, **characterised in that** the compressor is a spiral compressor.

7. A method of controlling a vehicle air conditioning device comprising a compressor (2) driven by the engine (1) of the vehicle (100) through clutch means (3), a condenser (7), at least one evaporator (8, 9) and a main circuit (30, 31, 32) for circulation of a refrigerating fluid between the compressor (2), the condenser (7) and said evaporator (8, 9), a complementary circuit (33), intended to return the gases discharged by the compressor directly to the suction of the compressor, a device (5, 10) for controlling the actuation and de-actuation of the complementary circuit, and means (15, 16) of detecting tick-over, acceleration and deceleration phases of the vehicle, **characterised in that** it comprises sequences of actuating the complementary circuit (33) on detection of an acceleration of the vehicle engine.

8. A method according to claim 7, **characterised in that,** the air conditioning device comprising a device (4, 10) for controlling the engagement and disengagement of the compressor, the method comprises sequences of actuating the complementary circuit (33) simultaneous with phases of engaging the compressor.

9. A method according to claim 8, **characterised in that** it comprises sequences of preventing engagement of the compressor on detection of the acceleration of the vehicle or of a high engine speed.

10. A method according to one of claims 7 to 9, **characterised in that,** the device comprising means (11, 12) of measuring internal and external temperature of the vehicle, the method comprises sequences of regulating the internal temperature of the vehicle by controlling the complementary circuit (33) according to measurements made by the means of measuring the internal and external temperature of the vehicle.

11. A method according to one of claims 7 to 10, **characterised in that** the sequences of actuating the complementary circuit (33) on detection of acceleration of the vehicle engine are followed by sequences of maintaining the complementary circuit in operation for a maximum period depending on the measurement of the internal temperature of the vehicle.

## Patentansprüche

1. Vorrichtung zur gesteuerten Klimatisierung von einem Fahrzeug, welche umfasst, einen Kompressor (2) angetrieben durch den Motor (1) des Fahrzeugs mittels einer Kupplung (3), einen Kondensor (7), mindestens einen Verdampfer (8, 9) und einen Hauptkreislauf einer Kühlflüssigkeit zwischen dem Kompressor (2), dem Kondensor (7) und dem besagten Verdampfer (8, 9), wobei der Kreislauf einen ersten Zweig (30) zur Zufuhr der Flüssigkeit vom Kompressor (2) zum Kondensor (7), einen zweiten Zweig (31) zur Zufuhr der Flüssigkeit vom Kondensor (7) zu dem besagten Verdampfer (8, 9), einen dritten Zweig (32) zum Absaugen der Flüssigkeit vom Verdampfer (8, 9) zu dem Kompressor (2), welcher einen komplementären Kreislauf (33) umfasst, welcher zwischen dem ersten Zweig (30) und dem dritten Zweig (32) angebracht ist, mit dem Ziel die durch den Kompressor verdrängten Gase direkt zum Absaugen durch den Kompressor zurückzusenden und welcher eine Steuerungsvorrichtung (5, 10) zum Ein- und Ausschalten des komplementären Kreislaufs umfasst, **gekennzeichnet dadurch, dass** die Steuerungsvorrichtung (5, 10) ein Elektroventil (5) und einen Verwaltungsrechner (10) der Vorrichtung zur Klimatisierung umfasst, wobei der besagte Rechner Mittel (15) zur Feststellung von Phasen des Betriebs des Fahrzeuges umfasst.

2. Die Vorrichtung gemäß Anspruch 1, **gekennzeichnet dadurch, dass** sie ein Einwegventil (6) umfasst, welches sich auf dem ersten Zweig (30) nachgelagert zu dem komplementären Kreislauf (33) befindet und die Flüssigkeit in dem Kondensor während des Anschaltens des komplementären Kreislaufs (33) zurückhält.

3. Die Vorrichtung gemäß Anspruch 1 oder 2, **gekennzeichnet dadurch, dass** der Rechner (10) Mittel (15) zur Feststellung von Phasen der Beschleunigung des Fahrzeuges umfasst.

4. Die Vorrichtung gemäß dem Anspruch 3, **gekennzeichnet dadurch, dass** der Rechner (10) Mittel (16) zur Feststellung des Betriebs des Leerlaufs des Motors (1) umfasst.

5. Die Vorrichtung gemäß einer der vorhergehenden Ansprüche, **gekennzeichnet dadurch, dass** sie Mittel (11, 12) zur Messung der internen und/oder externen Temperatur des Fahrzeugs umfasst.

6. Vorrichtung gemäß einem der vorhergehenden Ansprüche, **gekennzeichnet dadurch, dass** der Kompressor ein Spiralenkompressor ist.

7. Verfahren zur Steuerung einer Vorrichtung zur Klimatisierung eines Fahrzeuges, welches umfasst: einen Kompressor (2) angetrieben durch den Motor (1) des Fahrzeugs (100) über eine Kupplung (3), einen Kondensor (7), mindestens einen Verdampfer (8, 9) und einen Hauptkreislauf (30, 31, 32) für eine Kühlflüssigkeit zwischen dem Kompressor (2), dem Kondensor (7) und dem besagten Verdampfer (8, 9), einen komplementären Kreislauf (33), welcher dafür vorgesehen ist, das durch den Kompressor verdrängte Gas direkt zum Absaugen des Kompressors zurückzuschicken, eine Steuerungsvorrichtung (5, 10) zum Ein- und Ausschalten des Komplementärkreislaufs und Mittel (15, 16) zur Feststellung von Phasen des Leerlaufs, der Beschleunigung und der Verlangsamung des Fahrzeuges, **gekennzeichnet dadurch, dass** es Sequenzen des Einschaltens des komplementären Kreislaufs (33) bei der Feststellung einer Beschleunigung des Motors des Fahrzeuges umfasst.

8. Das Verfahren gemäß dem Anspruch 7, **gekennzeichnet dadurch, dass** die Vorrichtung zur Klimatisierung eine Steuerungsvorrichtung (4, 10) zum Ein- und Auskuppeln des Kompressors umfasst, wobei das Verfahren Sequenzen des Einschaltens des Komplementärkreislaufs (33) gleichzeitig zu den Phasen der Kupplung des Kompressors umfasst.

9. Das Verfahren gemäß dem Anspruch 8, **gekennzeichnet dadurch, dass** es Sequenzen des Verbots der Kupplung des Kompressors bei der Feststellung der Beschleunigung des Fahrzeuges oder des Hochbetriebs des Motors umfasst.

10. Das Verfahren gemäß einem der Ansprüche 7 bis 9, **gekennzeichnet dadurch, dass** die Vorrichtung Mittel (11, 12) zum Messen der internen oder äußeren Temperatur des Fahrzeugs umfasst, wobei das Verfahren Sequenzen zur Regulierung der internen Temperatur des Fahrzeugs durch Steuerung des komplementären Kreislaufs (33) in Abhängigkeit von Messungen, welche durch die Mittel zur Messung der internen und äußeren Temperatur des Fahrzeugs realisiert wurden, umfasst.

11. Das Verfahren gemäß einem der Ansprüche 7 bis 10, **gekennzeichnet dadurch, dass** die Sequenzen des Einschaltens des Komplementärkreislaufs (33) bei der Feststellung der Beschleunigung des Motors des Fahrzeuges durch Sequenzen der Aufrechterhaltung der Funktion des Komplementärkreislaufs mit einer maximalen Dauer gefolgt werden, welche von der Messung der internen Temperatur des Fahrzeugs abhängt.
